# EUROPEAN PATENT APPLICATION

(11) **EP 3 260 612 A1**
(43) Date of publication of application: **27.12.2017**
(21) Application number: 16175362.9
(22) Date of filing: 20.06.2016
(51) Int. Cl.: E03F 5/02, E03F 7/06, A01K 3/00

(54) **A STORM DRAIN AND A DEVICE FOR THE RELEASE OF AMPHIBIANS FROM A STORM DRAIN**

(71) Applicant: Sjorstechniek B.V., 1353 LV Almere (NL)
(72) Inventor: TOETER, George, 1353 LV Almere (NL)
(74) Representative: Plaggenborg, Menko Bernard

(57) **Abstract**

Storm drain (2) comprising a device (1; 10) for enabling amphibians to release themselves from the storm drain (2), said storm drain (2) having a top side (8) with an entrance for receiving rain water in said storm drain (2) and a bottom side (7) that is connected to a sewer pipe, a sewer lid (14) being positionable between a first position for closing of an entrance to said sewer pipe and a second position for at least partly providing access to the entrance of said sewer pipe. The storm drain (2) is characterized in that said device (1; 10) for enabling amphibians to release themselves from the storm drain (2) comprises a plate-shaped grid having recesses (4) for providing a holding surface to said amphibians, extending from a position near said bottom (7) to said entrance at the top side (8) of said storm drain (2).

## Description

The present invention relates to a storm drain according to the preamble of claim 1 and to a device for the release of amphibians from a storm drain, according to the preamble of claim 6.

It is known in the art to provide storm drains at roadsides. Rainwater usually flows in these storm drains and then is removed through a sewer system.

Since the entrance to such storm drains is quite large, amphibians like frogs, salamanders and the like are equally washed away through these entrances and end up in these storm drains. Due to the steep walls of a storm drain, these amphibians are not able to escape and are doomed to die.

At present, there is no solution for amphibians ending up in a storm drain, except for people checking the storm drains for amphibians and saving these animals.

The invention therefore aims at providing a solution for rescuing amphibians from a storm drain without any further human intervention. More in particular, the invention aims at providing a device for enabling amphibians to release themselves from a storm drain.

The invention further aims at providing a device that can be easily installed at existing storm drains.

So as to obtain at least one of the above mentioned aims, the invention provides a storm drain as mentioned in claim 1. This storm drain has the advantage that all amphibians can easily release themselves from a storm drain, even when rainwater is still coming from the street and flowing into said storm drain.

It has also shown that in the storm drain according to the present invention, the device remains free from contaminants due to the rainwater cleaning same by flushing away any contaminants from said device. Such synergistic effect is a surprising and advantageous effect.

According to a first embodiment, the present invention relates to a storm drain comprising a device for enabling amphibians to release themselves from the storm drain, said storm drain having a top side with an entrance for receiving rain water in said storm drain and a bottom side that is connected to a sewer pipe. As known in the art, such sewer pipe is closed off by a valve body, hingedly connected to a wall of the storm drain so as to allow operators to open or close off the entrance to the sewer pipe, for example when cleaning the storm drain. This valve body is hereinafter referred to as "sewer lid". The storm drain according to the invention is characterized in that said device for enabling amphibians to release themselves from the storm drain comprises a plate-shaped grid having recesses for providing a holding surface to said amphibians, extending from a position near said bottom to said entrance at the top side of said storm drain. Such storm drain fulfils the goals as mentioned above and provides the advantages as indicated above.

According to an alternative embodiment, the storm drain comprises a lid at street level, said lid being provided at a top side of the storm drain, said lid positionable between a first position for closing of the storm drain and a second position for at least partly providing access to the storm drain. Such lid may be placed horizontally when in a closed position, in line with the road surface. Openings for receiving rain water thus will be positioned horizontally as well. As a consequence, the device for providing an escape route to the amphibians will extend up to said openings.

Preferably, in the storm drain according to the invention, the device is comprised of two parts, a first part of the device being connected to the sewer lid and a second part of the device being positioned in direct sequence to said first part towards the top side of the storm drain. Such allows the device to be placed inside the storm drain without taking in a substantial volume. As a consequence, the water flow is not interrupted whereas cleaning of the storm drain remains possible as well, without any interference of the device according to the present invention.

In this respect, it is especially preferred that said sewer lid has a length extending from a lowermost portion of the lid to an uppermost portion of the lid, and wherein said first part of the device is connected to said sewer lid substantially along its complete length.

A maximum strength and resistance against destruction is obtained when said second part of the device is at a position close to the sewer lid connected to a storm drain's wall.

Amphibians will have an easy route of travelling when a top edge of the first part and a bottom edge of the second part of the device are at substantially equal height.

According to another aspect, the present invention relates to a device to be positioned in a storm drain for enabling amphibians to release themselves from the storm drain, the device being characterized in that it comprises a plate-shaped grid, said plate-shaped grid having recesses for providing a holding surface to said amphibians. This device fulfils the goals as mentioned above.

According to a preferred embodiment, in the device according to the invention, the plate-shaped grid is manufactured from a waterproof material. Such ensures a long-lasting usability of the device such that no maintenance or replacement is required.

In that respect, it is especially preferred for the plate-shaped grid to be manufactured from a stainless steel, since such not only provides resistance against corrosion, but also resistance against destruction by physical influences, for example when the storm drain is cleaned, which is usually performed by putting a suction tube with much force in the storm drain.

It has shown that an optimum hold is obtained when said plate-shaped grid has an open lattice structure. The claws (or toes) of amphibians can easily get a grip on such recesses.

More in particular it is preferred that said plate-shaped grid is a perforated plate with through openings in the size of from 2 to 10 mm, preferably maximally 8 mm. Such allows the amphibians to obtain an optimum grip and easy release from the storm drain.

Hereafter, the invention will be further described by means of a drawing. The drawing shows in:
Fig. 1 a schematic view of a storm drain with two alternatives of a device according to the invention, and
Fig. 2 shows another alternative of the device according to the invention in a storm drain.

The same and similar parts and features have been denoted by the same reference numerals in the figures. However, for ease of understanding, not all parts that are required for a practical embodiment have been shown in the figures.

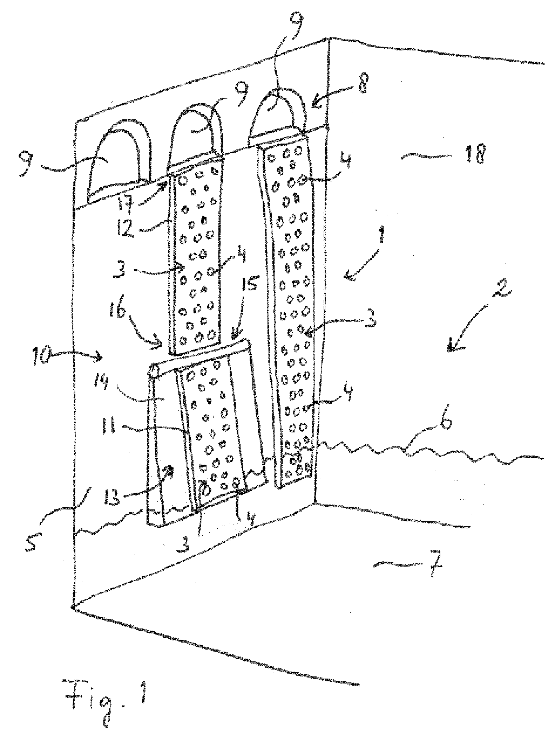

Fig. 1 shows a device 1, 10 for allowing amphibians to easily leave a storm drain 2 by climbing along the device's 1, 10 surface 3. The device 1, 10 according to the invention is embodied in two alternative embodiments.

According to a first embodiment, the device 1 is comprised of a plate-shaped grid with recesses 4 in its surface 3 so as to enable an amphibian (not shown) to get sufficient grip to climb upwards when said amphibian has fallen into said storm drain 2. The device 1 is positioned adjacent the storm drain's side wall 5.

Usually, there is a layer of water 6 (schematically shown as a wavy line) at the bottom 7 of the storm drain 2, which would cause amphibians sooner or later to die since escape from the storm drain is not possible. The device 1 according to the invention allows an amphibian to climb upwards until the exit is arrived at the top side 8 of the storm drain 2. At the top side 8 the amphibian may exit through holes 9, provided for allowing rainwater to enter the storm drain 2. It will be clear that storm drains of different shape and size may be provided with a device according to the invention for allowing amphibians to escape. For example, the device may be inserted in storm drains comprising a horizontal lid closing same off, and wherein the openings for receiving rain water are positioned horizontally.

An alternative embodiment is shown in Fig. 1 wherein a device 10 according to the invention is comprised of two parts, a first part 11 and a second part 12. Said first part 11 is provided on a wall surface 13 of a sewer lid 14. Said first part 11 extends to at least a substantial upper edge 15 of the sewer lid 14. The second part 12 of the device 10 runs along a side wall 5, wherein a lower portion 16 of said second part 12 is positioned at about the same height as the upper portion of said first part 11. An upper portion 17 of said second part 12 ends near the top side 8 of the storm drain 2.

The invention is not limited to the embodiments as mentioned above and as shown in the drawings. The invention is limited by the claims only. For example, the device 1, 10 may be comprised of a flat plate, more in particular a flat perforated plate as shown in the drawing, but may also be comprised of an angular profile, preferably an angular perforated profile. Such angular profile may be positioned in a storm drain's corner, abutting two adjacent walls 5, 18 of said storm drain 2.

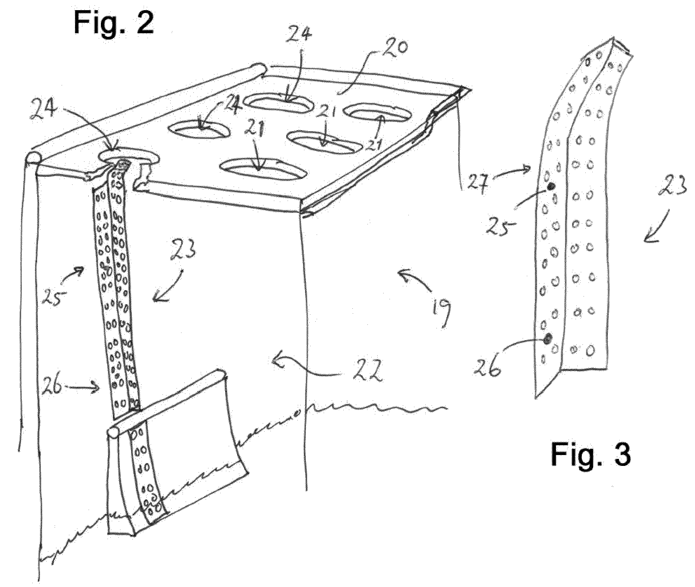

Fig. 2 shows another embodiment of a storm drain 19, being of a street drain type. A horizontal lid 20 closes off the said storm drain 19. Since the openings 21, 24 in the lid 20 are positioned at least at some distance from the side walls 22 of storm drain 19, another type of device 23 is required for enabling amphibians to escape from the storm drain 19. As can be seen from Fig. 2, the device 23 is embodied as an angular profile. As a consequence, amphibians are enabled to climb up the said device 23 and to reach a position away from the side wall 22 of the storm drain 19. Preferably, the device's material is of such a consistency, that the angular profile 23 can be bent towards an opening 24 in the lid 20 near the side wall 22, as shown in the partly broken away drawing of Fig. 2. So as to maintain an adequate connection to the wall and to have sufficient material to be bent towards an opening 21 in the lid 20, the device 23 is connected to the wall 22 at a position 25. Preferably, at least two connections are provided, for example a first, relatively high position 25 that is for example at least 10 cm below the lid 22. Preferably, the device 23 is connected at a second, relatively lower position 26 as well, so as to obtain sufficient firmness. Fig. 3 shows the device 23 in a bent shape. Bending commences at a position 27 above connection position 25.

An especially advantageous embodiment is comprised of a device according to the invention that is at least partially integrally formed with a sewer lid. The sewer lid is embodied for closing off an entrance to a sewer pipe ending up in said storm drain.

The invention also relates to all combinations of features described here independently of each other.

## Claims

1. A storm drain comprising a device for enabling amphibians to release themselves from the storm drain, said storm drain having a top side with an entrance for receiving rain water in said storm drain and a bottom side that is connected to a sewer pipe; **characterized in that** said device for enabling amphibians to release themselves from the storm drain comprises a plate-shaped grid having recesses for providing a holding surface to said amphibians, extending from a position near said bottom to said entrance at the top side of said storm drain.

2. A storm drain according to claim 1, wherein the device is comprised of two parts, a first part of the device being connected to a top side of the storm drain, preferably near the sewer lid, and a second part of the device being positioned in direct sequence to said first part towards the entrance at the top side of the storm drain.

3. A storm drain according to claim 2, said sewer lid having a length extending from a lowermost portion of the lid to an uppermost portion of the lid, and wherein said first part of the device is connected to said sewer lid substantially along its complete length.

4. A storm drain according to any of claim 2, wherein said second part of the device, at a position close to the uppermost portion of the sewer lid, has been connected to a storm drain's wall.

5. A storm drain according to claim 2, wherein a top edge of the first part and a bottom edge of the second part of the device are at substantially equal height.

6. A storm drain according to claim 1, a lid of the storm drain being provided at a top side of the storm drain, said lid positionable between a first position for closing of the storm drain and a second position for at least partly providing access to the storm drain.

7. A device for enabling amphibians to release themselves from the storm drain, **characterized in that** the device comprises a plate-shaped grid, said plate-shaped grid having recesses for providing a holding surface to said amphibians, said plate-shaped grid comprising connection means for connecting same to a wall of the storm drain.

8. A device according to claim 7, wherein said plate-shaped grid is manufactured from a waterproof material.

9. A device according to claim 7, wherein said plate-shaped grid is manufactured from a stainless steel.

10. A device according to claim 7, wherein said plate-shaped grid has an open lattice structure.

11. A device according to claim 7, wherein said plate-shaped grid is a perforated plate with through openings in the size of from 2 to 10 mm, preferably maximally 8 mm.

12. A device according to claim 7, wherein said plate-shaped grid has perforations for receiving a screw for connecting said device against the wall of a storm drain.

13. A device according to claim 7, wherein said device is integrally formed with a sewer lid.
